# EUROPEAN PATENT APPLICATION

(11) **EP 3 197 172 A1**
(43) Date of publication of application: **26.07.2017**
(21) Application number: 15835270.8
(22) Date of filing: 14.08.2015
(51) Int. Cl.: H04N 21/434, H04H 20/33

(54) **RECEPTION DEVICE AND RECEPTION METHOD**

(30) Priority: 29.08.2014 JP 2014176431
(71) Applicant: Sony Corporation, Tokyo 108-0075 (JP)
(72) Inventor: YOSHIMOCHI Naoki, Tokyo 108-0075 (JP)
(74) Representative: Witte, Weller & Partner Patentanwälte mbB
(86) International application number: PCT/JP2015/072945
(87) International publication number: WO 2016/031590

(57) **Abstract**

The present technology relates to a receiving apparatus and a receiving method that can minimize the effect of double laps of the time information indicating the order in which BB frames are selected in channel bonding.

The receiving apparatus receives a plurality of divided streams that is a plurality of data slices to which BB frames of a BB stream that is a stream including the BB frames are distributed; selects a next BB frame from selectable BB frames on the basis of difference values between time information items indicating order in which the BB frames are selected when the plurality of divided streams are reassembled; and reassembles the plurality of divided streams as the BB stream originally assembled by sequentially processing the BB frames in order in which the BB frames are selected. The present technology can be applied, for example, to channel bonding such as PLP bundling.

## Description

### TECHNICAL FIELD

The present technology relates to a receiving apparatus and a receiving method and, in particular, relates to a receiving apparatus, and a receiving method that can minimize the effect of double laps of the time information indicating the order in which BB frames are selected in channel bonding.

### BACKGROUND ART

Channel Bonding in which a stream at a high data rate is divided into a plurality of (channels of) divided streams and transmitted, and then the plurality of divided streams are reassembled as the stream at the original data rate on the receiving end in a digital broadcast is known. In the Digital Video Broadcasting-Cable second generation (DVB-C2) standard, Physical Layer Pipe (PLP) bundling is prescribed as a type of channel bonding (see, for example, Non-patent Document 1).

### CITATION LIST

### NON-PATENT DOCUMENT

Non-patent Document 1: DVB-C.2: ETSI EN 302 769 V1.2.1 (2011-04)

### SUMMARY OF THE INVENTION

### PROBLEMS TO BE SOLVED BY THE INVENTION

Meanwhile, in the DVB-C2 standard, data is transmitted by the Baseband (BB) frame. When PLP bundling is performed, the receiver end determines the order of the BB frames included in the plurality of divided streams with reference to the Input Stream Time Reference (ISCR) of the Input Stream Synchronizer (ISSY) included in the BB header added to each BB frame so as to reassemble (restore) the original stream.

As described above, the ISCR is the only order information (time information) used to determine the order in which the BB frames are transmitted as the plurality of divided streams. However, the ISCR is a 15-bit or 22-bit counter. Thus, when the counted number exceeds the maximum value of the counter, the counter counts from zero again.

Thus, a state in which a counter value exists over different laps (hereinafter, referred to as "double laps") occurs. An ISCR in double laps makes it difficult to determine an appropriate BB frame among the selectable BB frames, and thus makes it difficult to correctly rearrange the BB frames. Thus, there is a need for minimizing the effect of double laps of an ISCR that is the time information indicating the order in which the BB frames are selected in channel bonding.

In light of the foregoing, the present technology can minimize the effect of the double laps on the time information indicating the order of select of the BB frames in channel bonding.

### SOLUTIONS TO PROBLEMS

The receiving apparatus according to an aspect of the present technology is a receiving apparatus including: a receiving unit that receives a plurality of divided streams that is a plurality of data slices to which BaseBand (BB) frames of a BB stream are distributed, the BB stream being a stream including the BB frames; a selection unit that selects a next BB frame from selectable BB frames among the BB frames on the basis of difference values between time information items indicating order in which the BB frames are selected when the plurality of divided streams are reassembled; and a reassembling unit that reassembles the plurality of divided streams as the BB stream originally assembled by sequentially processing the BB frames in order in which the selection unit selects the BB frames.

The receiving apparatus according to an aspect of the present technology may be either an independent device or an internal block included in an apparatus. Furthermore, the receiving method according to an aspect of the present technology corresponds to the above-mentioned receiving apparatus according to an aspect of the present technology.

In the receiving apparatus and receiving method according to an aspect of the present technology, a plurality of divided streams that is a plurality of data slices, each of which includes distributed BB frames of a BB stream that is a stream of the BB frames is received; the next BB frame is selected from selectable BB frames among the BB frames on the basis of the difference values in the time information indicating the order in which the BB frames are selected when the plurality of divided streams are reassembled; and processing the BB frames in the order in which the BB frames are selected reassembles the plurality of divided streams as the BB stream originally assembled.

### EFFECTS OF THE INVENTION

According to an aspect of the present technology, the effect of double laps of the time information indicating the order in which BB frames are selected can be minimized in channel bonding.

Note that the effects of the present technology are not limited to the effects described herein, and may be one of the effects described in the present disclosure.

### BRIEF DESCRIPTION OF DRAWINGS

Fig. 1 is a diagram of the configuration of an embodiment of a transmission system to which the present technology is applied.
Fig. 2 is an explanatory diagram of the outline of PLP bundling.
Fig. 3 is a diagram of an exemplary configuration of a sending apparatus.
Fig. 4 is an explanatory flowchart of the flow of a sending process.
Fig. 5 is a diagram of an exemplary configuration of a receiving apparatus.
Fig. 6 is an explanatory flowchart of the flow of a receiving process.
Fig. 7 is a diagram of the flow of BB frames processed in the sending apparatus and the receiving apparatus.
Fig. 8 is a diagram of an exemplary format of a BB frame.
Fig. 9 is a diagram of an exemplary format of an ISSY included in a BB header.
Fig. 10 is an explanatory diagram of double laps of an ISCR in PLP bundling.
Fig. 11 is an explanatory diagram of a method in which an SYNCD is used to avoid double laps of an ISCR.
Fig. 12 is a diagram of an exemplary functional configuration of a control unit when an SYNCD is used to determine a BB frame to be selected.
Fig. 13 is an explanatory flowchart of the flow of a first BB frame selection process.
Fig. 14 is an explanatory diagram of a method in which difference values between ISCRs are used to avoid double laps of an ISCR.
Fig. 15 is an explanatory diagram of a method in which difference values between ISCRs are used to avoid double laps of an ISCR.
Fig. 16 is a diagram of an exemplary functional configuration of a control unit when a difference value between ISCRs is used to determine a BB frame to be selected.
Fig. 17 is an explanatory flowchart of the flow of a second BB frame selection process.
Fig. 18 is a diagram of an exemplary configuration of a computer.

### MODE FOR CARRYING OUT THE INVENTION

Hereinafter, the embodiments of the present technology will be described with reference to the appended drawings. Note that the embodiments will be described in the following order.

1. System Configuration
2. Configuration of Apparatus compatible with PLP bundling
3. Method for Avoiding Double Laps of ISCR in PLP bundling
   (1) Determination of BB Frame to Be Selected Using SYNCD
   (2) Determination of BB Frame to Be Selected Using Difference Value between ISCRs
4. Computer Configuration

### <1. System Configuration>

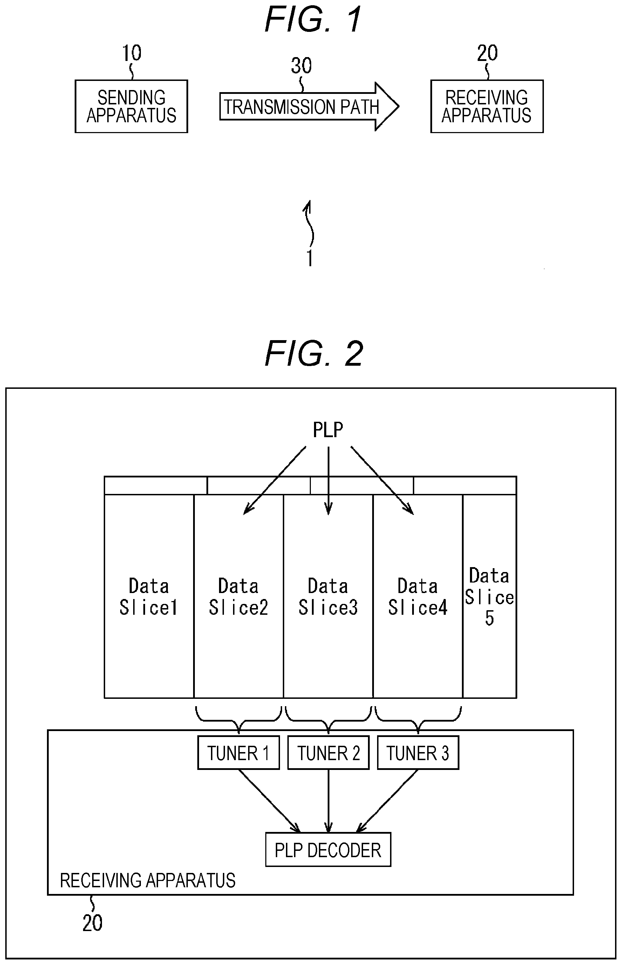

Fig. 1 is a diagram of the configuration of an embodiment of a transmission system to which the present technology is applied. Note that the system is a logical set of a plurality of devices, and it does not matter whether the devices having each configuration are in a housing.

In Fig. 1, a transmission system 1 includes a sending apparatus 10 and a receiving apparatus 20.

The sending apparatus 10 performs, for example, sending of a television program (a digital broadcast or data transmission). In other words, the sending apparatus 10 sends (transmits), for example, a stream of the current data to be sent such as video data or audio data of a television program as a digital broadcast signal, for example, via a transmission path 30 that is a (wired) cable television network.

The receiving apparatus 20 receives the digital broadcast signal sent from the sending apparatus 10 via the transmission path 30, and restores and outputs the original stream. For example, the receiving apparatus 20 outputs video data or audio data of a television program.

Note that the transmission system 1 of Fig. 1 can be applied to the data transmission in compliance, for example, with the DVB-T2 standard, the DVB-S2 standard, or the standard of the Advanced Television Systems Committee standards (ATSC) or the Integrated Services Digital Broadcasting (ISDB), or another data transmission in addition to the data transmission in compliance with the DVB-C2 standard. Furthermore, not only a cable television network but also, for example, satellite communication or terrestrial wave can be used as the transmission path 30.

### <2. Configuration of Apparatus compatible with PLP bundling>

### (Outline of PLP Bundling)

Fig. 2 is an explanatory diagram of the outline of PLP bundling.

In the DVB-C2 standard, PLP bundling is prescribed as a type of channel bonding. In channel bonding, a stream at a high data rate is divided into a plurality of (channels of) divided streams and transmitted, and then the plurality of divided streams are reassembled as the stream at the original data rate on the receiving end.

In these years, there is a need for a digital broadcast sending an image at high resolution of, for example, so-called 8K. When an 8K-resolution image is encoded in a High Efficiency Video Coding (HEVC) scheme, the throughput of about 100 Mbps is required to transmit the high-data-rate data provided by the encoding. It is difficult to transmit the Physical Layer Pipe (PLP) in Fig. 2 equivalent to such the high-data-rate data as one Data Slice.

In light of the foregoing, the sending apparatus 10 in the transmission system 1 is configured to divide the actual data that is the one PLP by the BB frame and transmit the PLP as a plurality of data slices, by using PLP bundling that is a type of channel bonding. In Fig. 2, the PLP is divided into data slices 2 to 4, and transmitted to the receiving apparatus 20. In the receiving apparatus 20, tuners 1 to 3 receive and process the data slices 2 to 4 and then a PLP decoder processes the data slices 2 to 4. This reassembles the actual data that is the PLP.

Note that, in the DVB-C2 standard, the transmission band in which an Orthogonal Frequency Division Multiplexing (OFDM) signal is transmitted is separated, for example, by the (about) 6 MHz. Now, on the assumption that a transmission band separated by the 6 MHz is referred to as a unit transmission band, the receiving apparatus 20 receives the OFDM signal in the unit transmission band in which the data slices including the PLP of the actual data of a desired television program are transmitted, and processes the data slices included in the OFDM signal.

Furthermore, the PLP is (the data transmitted through) logical channels included in data slices, and the PLP is given a unique PLP ID used to identify the PLP. For example, a PLP with a PLP ID corresponds to the actual data of a television program. Hereinafter, the PLP of which PLP ID is i will be written also as a PLP#i.

Note that, in the description below, a stream of BB frames is referred to as a "BB stream", and a plurality of streams provided by the division of the BB stream is referred to as "divided streams". In other words, a divided stream includes the BB frames.

### (Configuration of Sending Apparatus)

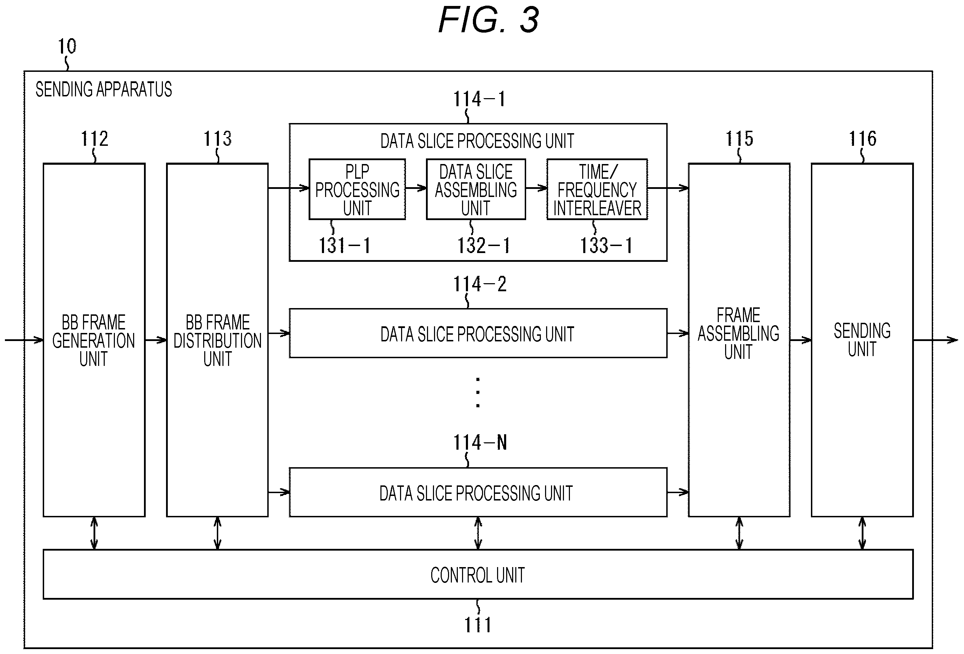

Fig. 3 is a diagram of an exemplary configuration of the sending apparatus 10 of Fig. 1.

The sending apparatus 10 is configured to divide the actual data that is one PLP#i (PLP given the same PLP ID) by the BB frame and transmit the actual data as a plurality of data slices, by using PLP bundling that is a type of channel bonding.

In Fig. 3, the sending apparatus 10 includes a control unit 111, a BB frame generation unit 112, a BB frame distribution unit 113, data slice processing units 114-1 to 114-N (the N is an integer equal to or larger than one), a frame assembling unit 115, and a sending unit 116.

The control unit 111 controls the operation of each unit of the sending apparatus 10.

To the BB frame generation unit 112 is provided the actual data (for example, the current data of a Transport Stream (TS) or the like) as the PLP#i having the same PLP ID. The BB frame generation unit 112 generates BB frames, for example, by giving BB headers to the provided actual data. Note that the BB header includes an Input Stream Time Reference (ISCR) as an Input Stream Synchronizer (ISSY). The BB frame generation unit 112 provides the BB stream including the BB frames to the BB frame distribution unit 113.

The BB frame distribution unit 113 determines the BB stream provided from the BB frame generation unit 112 as the object to be divided, and divides the BB stream by the BB frame into a plurality of divided streams by repeating distributing each BB frame of the BB stream to one data slice among a plurality of data slices. Furthermore, the BB frame distribution unit 113 distributes a plurality of divided streams provided by the division of the BB stream to any one of the data slice processing units 114-1 to 114-N.

The data slice processing unit 114-1 processes the divided stream distributed by the BB frame distribution unit 113. The data slice processing unit 114-1 includes a PLP processing unit 131-1, a data slice assembling unit 132-1, and a time/frequency interleaver 133-1.

The PLP processing unit 131-1 encodes the BB frames included in the divided frame distributed by the BB frame distribution unit 113 and provided to the data slice processing unit 114-1 in error-correcting coding. Furthermore, the PLP processing unit 131-1 obtains FEC frames by the error-correcting coding and maps the FEC frames on signal points in a predetermined constellation by a predetermined number of bits that is a symbol. Subsequently, the PLP processing unit 131-1 generates FEC frames by extracting the mapped symbols by the FEC frame, and gives the generated FEC frames FEC frame headers. By this, the PLP processing unit 131-1 generates data slice packets.

To the data slice assembling unit 132-1 are provided one or more data slice packets from the PLP processing unit 131-1. The data slice assembling unit 132-1 generates a data slice from the one or more data slice packets provided by the PLP processing unit 131-1 and provides the data slice to the time/frequency interleaver 133-1.

The time/frequency interleaver 133-1 interleaves the data slice provided from the data slice assembling unit 132-1 in the time direction and the frequency direction, and provides the interleaved data slice to the frame assembling unit 115.

Although not illustrated, the data slice processing units 114-2 to 114-N include PLP processing units 131-2 to 131-N, data slice assembling units 132-2 to 132-N, and time/frequency interleavers 133-2 to 133-N, similarly to the data slice processing unit 114-1. Each of the data slice processing units 114-2 to 114-N, similarly to the data slice processing unit 114-1, processes the divided stream distributed by the BB frame distribution unit 113 to generate a data slice, and provides the generated data slice to the frame assembling unit 115.

Note that, in the description below, when it is unnecessary to especially distinguish the data slice processing units 114-1 to 114-N, the data slice processing units 114-1 to 114-N are referred to as a data slice processing unit 114 for description. Similarly, when it is unnecessary to especially distinguish the PLP processing units 131-1 to 131-N, the data slice assembling units 132-1 to 132-N, and the time/frequency interleavers 133-1 to 133-N, the PLP processing units 131-1 to 131-N, the data slice assembling units 132-1 to 132-N, and the time/frequency interleavers 133-1 to 133-N are referred to as a PLP processing unit 131, a data slice assembling unit 132, and a time/frequency interleaver 133, respectively, for description.

To the frame assembling unit 115 are provided one or more data slices from (the time/frequency interleavers 133-1 to 133-N of) the data slice processing units 114-1 to 114-N. The frame assembling unit 115 assembles a C2 frame including the one or more data slices from the data slice processing units 114-1 to 114-N and provides the C2 frame to the sending unit 116.

The sending unit 116 transforms the C2 frame provided from the frame assembling unit 115 in Inverse Fast Fourier Transform (IFFT) to provide an OFDM signal, and converts the provided OFDM signal in Digital to Analog (DA) Conversion. Subsequently, the sending unit 116 modulates the OFDM signal that is the digital signal converted to an analog signal to a Radio Frequency (RF) signal, and sends the RF signal as a digital broadcast signal via the transmission path 30.

Note that, for description, the illustration of the blocks of the sending apparatus 10 that are not related to the PLP bundling is omitted in Fig. 3 properly.

### (Flow of Sending Process)

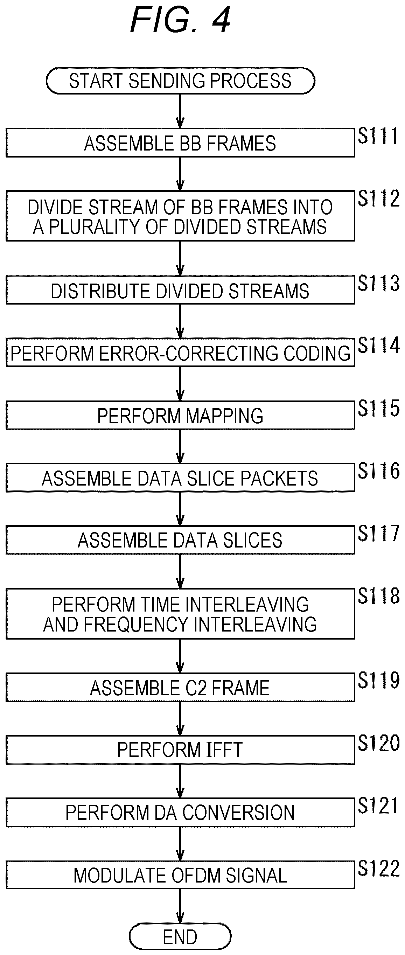

Next, the flow of a sending process that the sending apparatus 10 of Fig. 3 performs will be described with reference to the flowchart of Fig. 4.

In step S111, the BB frame generation unit 112 places the actual data (for example, the current data of TS of the like) that is the provided PLP into a data field of BB frames, and assembles BB frames by giving the data field BB headers including ISSYs (ISCRs).

In step S112, the BB frame distribution unit 113 divides the BB stream by the BB frame into a plurality of divided streams by distributing the BB frame assembled in the process of step S111 to one data slice among a plurality of data slices.

In step S113, the BB frame distribution unit 113 distributes each of the divided streams provided by the process of step S112 to any one of the data slice processing units 114-1 to 114-N. This provides each of the divided streams provided by the division of the BB stream to any one of the data slice processing units 114-1 to 114-N.

The data slice processing unit 114 performs the processes from step S114 to step S118. In other words, in step S114, the PLP processing unit 131 encodes the BB frames included in the divided frame distributed by the BB frame distribution unit 113 and provided to the data slice processing unit 114 in error-correcting coding.

In step S115, the PLP processing unit 131 maps FEC frames provided by the error-correcting coding in the process of step S114 on signal points in a predetermined constellation by a predetermined number of bits that is a symbol.

In step S116, the PLP processing unit 131 generates FEC frames by extracting the symbols mapped in the process of step S115 by the FEC frame, and gives the generated FEC frames FEC frame headers. By this, the PLP processing unit 131 generates data slice packets.

In step S117, the data slice assembling unit 132 assembles a data slice with one or more data slice packets assembled in the process of step S116.

In step S118, the time/frequency interleaver 133 interleaves the data slice assembled in the process of step S117 in the time direction and the frequency direction.

In step S119, the frame assembling unit 115 assembles a C2 frame including the one or more interleaved data slices from (the time/frequency interleavers 133 of) the data slice processing units 114-1 to 114-N.

In step S120, the sending unit 116 transforms the C2 frame assembled in the process of step S119 in IFFT. Furthermore, in step S121, the sending unit 116 converts the OFDM signal provided by the IFFT in the process of step S120 in DA conversion.

In step S122, the OFDM signal converted by the DA conversion in the process of step S121 is modulated to an RF signal and transmitted as a digital broadcast signal via the transmission path 30 (Fig. 1). With the completion of the process of step S122, the sending process in Fig. 4 is completed.

The flow of the sending process has been described above.

### (Configuration of Receiving Apparatus)

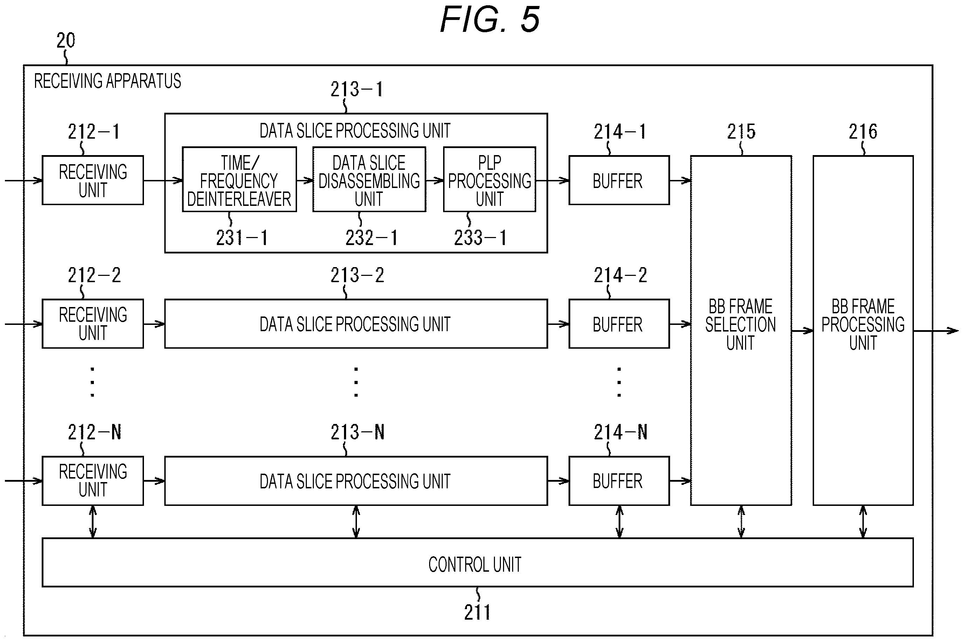

Fig. 5 is a diagram of an exemplary configuration of the receiving apparatus 20 of Fig. 1.

The receiving apparatus 20 is configured to reassemble (restore) the actual data that is one PLP#i distributed and sent (transmitted) as a plurality of data slices in the PLP bundling.

In Fig. 5, the receiving apparatus 20 includes a control unit 211, receiving units 212-1 to 212-N (the N is an integer equal to or larger than one), data slice processing units 213-1 to 213-N, buffers 214-1 to 214-N, a BB frame selection unit 215, and a BB frame processing unit 216.

The control unit 211 controls the operation of each unit of the receiving apparatus 20.

The receiving unit 212-1 receives and demodulates the RF signal in a predetermined band transmitted as the digital broadcast signal via the transmission path 30 from the sending apparatus 10, and converts the resulting demodulated signal (OFDM signal) in Analog to Digital (AD) Conversion. Subsequently, the receiving unit 212-1 transforms the signal demodulated and converted from the analog signal to a digital signal in Fast Fourier Transform (FFT), and provides the data slice provided by the FFT to the data slice processing unit 213-1.

The data slice processing unit 213-1 processes the data slice provided from the receiving unit 212-1. The data slice processing unit 213-1 includes a time/frequency deinterleaver 231-1, a data slice disassembling unit 232-1, and a PLP processing unit 233-1.

The time/frequency deinterleaver 231-1 deinterleaves the data slice provided from the receiving unit 212-1 in the time direction and the frequency direction, and provides the deinterleaved data slice to the data slice disassembling unit 232-1.

The data slice disassembling unit 232-1 disassembles the data slice provided from the time/frequency deinterleaver 231-1 into data slice packets and provides the data slice packets to the PLP processing unit 233-1.

The PLPprocessingunit 233-1 disassembles the data slice packets as FEC frames by removing the FEC frame headers from the data slice packets provided from the data slice disassembling unit 232-1. Note that the modulation scheme or code length for the FEC frame is recognized on the basis of the removed FEC frame header, and the subsequent demapping or error-correcting decoding is performed.

Furthermore, the PLP processing unit 233-1 restores the divided stream including the BB frames by demapping (the symbols of) the FEC frames and decoding the error-corrected codes of the demapped FEC frames. The data slice processing unit 213-1 provides (the BB frames included in) the divided stream restored from the data slice to the buffer 214-1.

The buffer 214-1 includes, for example, a First In First Out (FIFO) memory so as to sequentially store (the BB frames included in) the divided streams provided from (the PLP processing unit 233-1 of) the data slice processing unit 213-1.

Although not illustrated, the data slice processing units 213-2 to 213-N include time/frequency deinterleavers 231-2 to 231-N, data slice disassembling units 232-2 to 232-N, and PLP processing units 233-2 to 233-N, similarly to the data slice processing unit 213-1. Similarly to the data slice processing unit 213-1, the data slice processing units 213-2 to 213-N process the data slices provided from the receiving units 212-2 to 212-N such that (the BB frames included in) the divided streams provided by the processing are sequentially stored in the buffer 214-2 to 214-N.

Note that, in the description below, when it is unnecessary to especially distinguish the data slice processing units 213-1 to 213-N, the data slice processing units 213-1 to 213-N will be referred to as a data slice processing unit 213 for description. Similarly, when it is unnecessary to especially distinguish the time/frequency deinterleavers 231-1 to 231-N, the data slice disassembling units 232-1 to 232-N, and the PLP processing units 233-1 to 233-N, the time/frequency deinterleavers 231-1 to 231-N, the data slice disassembling units 232-1 to 232-N, and PLP processing units 233-1 to 233-N will be referred to as a time/frequency deinterleaver 231, a data slice disassembling unit 232, a PLP processing unit 233, respectively, for description. Furthermore, when it is unnecessary to especially distinguish the buffers 214-1 to 214-N, the buffers 214-1 to 214-N will be referred to as a buffer 214.

On the basis of the ISSYs (ISCRs) included in the BB headers added to the BB frames included in the plurality of divided streams stored in the buffers 214-1 to 214-N, the BB frame selection unit 215 reads the BB frames in the order in which the BB frames are arranged in the original BB stream from the buffers 214-1 to 214-N, and provides the BB frames to the BB frame processing unit 216.

The BB frame processing unit 216 reassembles (restores) the original BB stream by rearranging the BB frames in the order in which the BB frame selection unit 215 provides the BB frames. Furthermore, the BB frame processing unit 216 restores and outputs the actual data (for example, the current data of TS or the like) by disassembling the BB frames included in the original BB stream.

Note that, for description, the illustration of the blocks of the receiving apparatus 20 that are not related to the PLP bundling is omitted in Fig. 5 properly. Furthermore, the configuration of the receiving apparatus 20 including a plurality of receiving units 212 corresponding to the data slice processing units 213 has been described with reference to Fig. 5. However, only a receiving unit 212 capable of receiving RF signals in a wide band may be provided such that the data slices included in the C2 frame may be disassembled and the disassembled data slices may be provided to the data slice processing units 213-1 to 213-N.

### (Flow of Receiving Process)

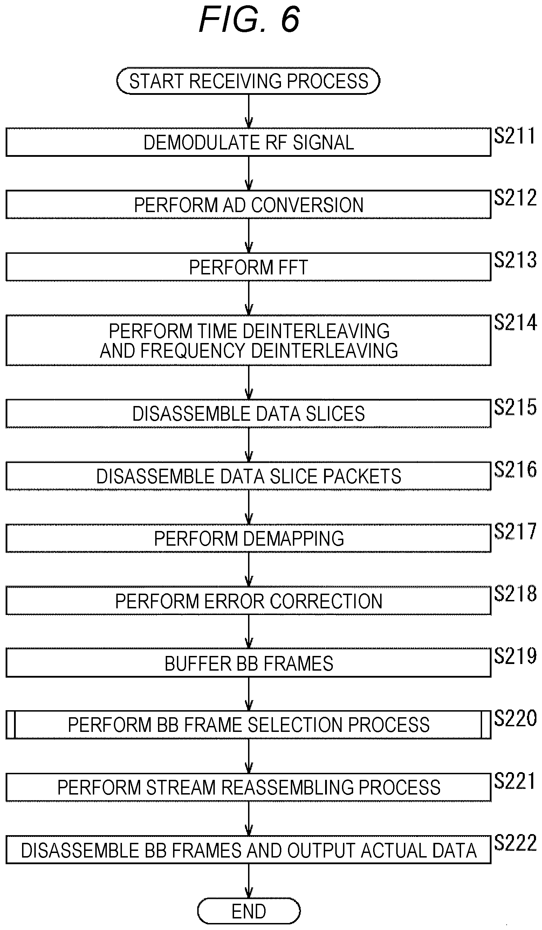

Next, the flow of a receiving process that the receiving apparatus of Fig. 5 performs will be described with reference to the flowchart of Fig. 6.

In step S211, the receiving unit 212 receives and demodulates the RF signal in a predetermined band sent as the digital broadcast signal from the sending apparatus 10 via the transmission path 30.

In step S212, the receiving unit 212 converts the demodulated signal (OFDM signal) that is the RF signal demodulated in the process of step S211 in AD conversion.

In step S213, the receiving unit 212 transforms the digital signal provided by the AD conversion in step S212 in FFT.

In step S214, the time/frequency deinterleaver 231 deinterleaves the data slice provided by the process of step S213 in the time direction and the frequency direction.

In step S215, the data slice disassembling unit 232 disassembles the data slices deinterleaved in the process of step S214 into data slice packets.

In step S216, the PLP processing unit 233 disassembles the data slice packets as FEC frames by removing the FEC frame headers from the data slice packets disassembled in the process of step S215.

In step S217, the PLP processing unit 233 demaps (the symbols of) the FEC frames provided by the process of step S216.

In step S218, the PLP processing unit 233 restores the divided stream including the BB frames by decoding the error-corrected codes of the FEC frames demapped in the process of step S217.

In step S219, the buffer 214 stores (buffers) the BB frames included in the divided stream restored in the process of step S218.

In step S220, the BB frame selection unit 215 performs a BB frame selection process. In this BB frame selection process, on the basis of the ISSYs (ISCRs) included in the BB headers added to the BB frames included in the plurality of divided streams stored in the buffers 214-1 to 214-N in the process of step S219, the BB frame to be read from the buffers 214-1 to 214-N is selected.

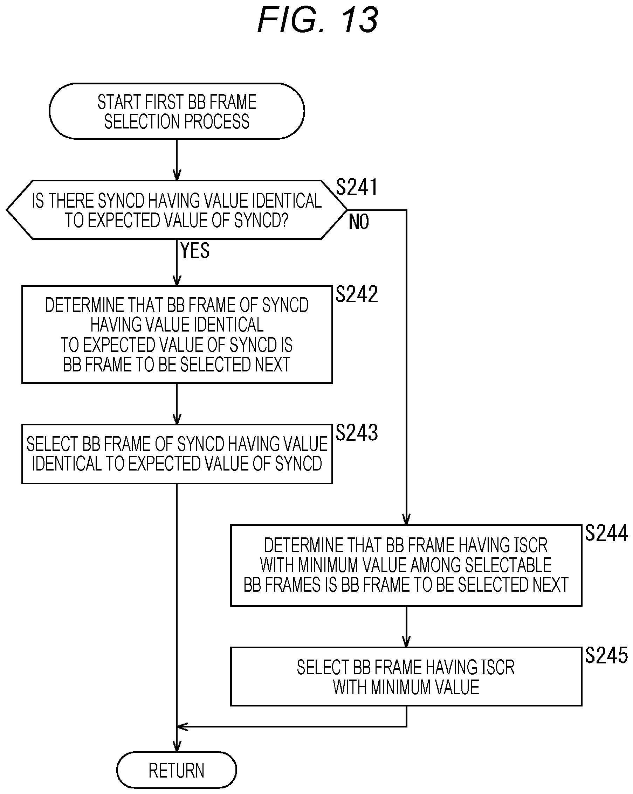

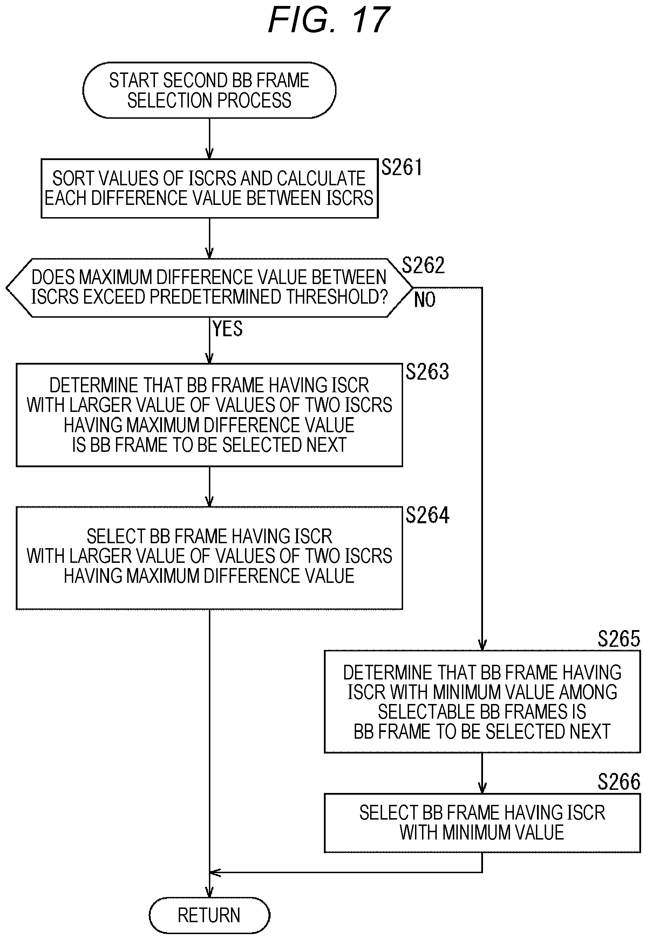

In other words, each of the BB frames included in the divided streams stored in the buffers 214-1 to 214-N is stored until the time to read the BB frame in the order in which the BB frames are arranged in the original BB stream. At the time to read the BB frame in the order in which the BB frames are arranged in the original BB stream, the BB frame is read from the buffers 214-1 to 214-N. Note that the selection process for selecting the BB frame will be described below in detail with reference to the flowcharts of Figs. 13 and 17.

In step S221, the BB frame processing unit 216 performs a stream reassembling process. In the stream reassembling process, rearranging the BB frames selected in the process of step S220 in the order of the selection reassembles (restores) the original BB stream.

In step S222, the BB frame processing unit 216 disassembles the BB frames included in the original BB stream reassembled in the process of step S221 so as to restore and output the actual data (for example, the current data of TS or the like). With the completion of the process of step S222, the receiving process in Fig. 6 is completed.

The flow of the receiving process has been described above.

### (Flow of BB Frame)

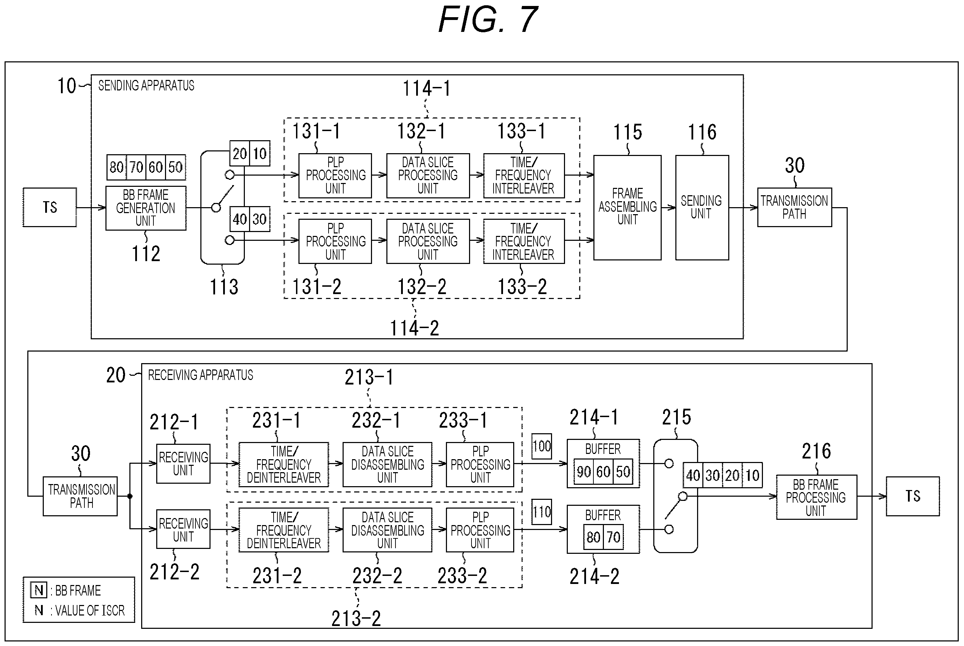

Next, with reference to Fig. 7, the flow of the BB frame processed by the sending apparatus 10 of Fig. 3 and the receiving apparatus 20 of Fig. 5 in PLP bundling will be described. Note that, Fig. 7 does not illustrate some components of the sending apparatus 10 and the receiving apparatus 20. Furthermore, the rectangles with numbers in the drawing depict the BB frames, and the numbers in the rectangles indicate the values of the ISCRs (timestamps).

In Fig. 7, the BB frame generation unit 112 in the sending apparatus 10 generates BB frames from the actual data (for example, the current data of TS or the like), and BB headers including an ISSY (ISCR) are sequentially added to the BB frames. In other words, in this example, the BB frames having ISCRs of "10" to "80" are generated, and the value of the ISCR included in the BB frame is increased by "10".

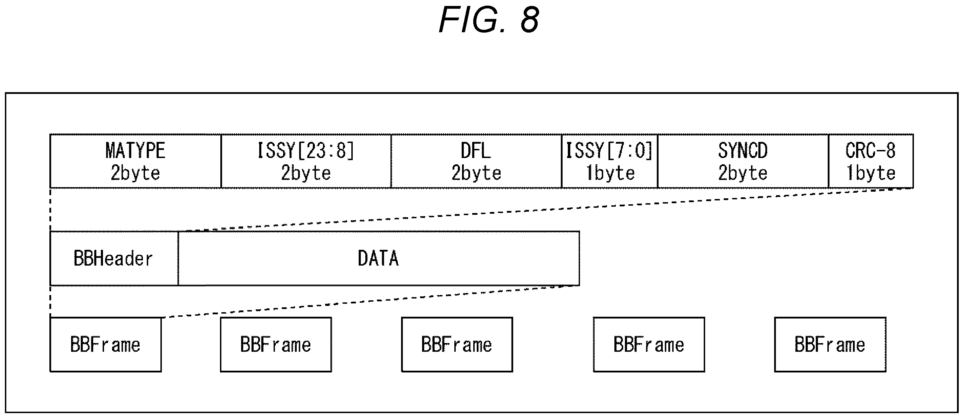

In this example, as illustrated in Fig. 8, the BB frame (BB Frame) includes a BB header (BB Header) and a data field (DATA) in which the actual data is placed. In the BB header are placed a two-byte MATYPE, a two-byte ISSY, a two-byte DFL, a one-byte ISSY, a two-byte SYNCD, and a one-byte CRC-8 in that order.

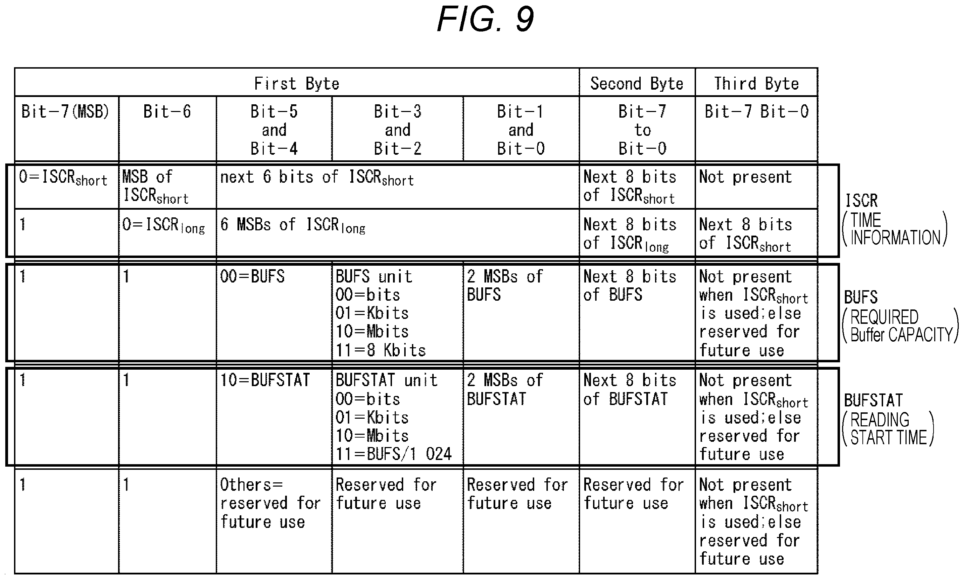

Furthermore, Fig. 9 illustrates an exemplary format of the ISSY included in the BB header. As illustrated in Fig. 9, the ISSY includes an ISCR, a BUFS, and a BUFSTAT.

The ISCR is the information indicating the transmission time at which the data (BB frame) is transmitted, and is two or three-byte information. When PLP bundling is performed, an ISCR is necessarily placed in the three-byte field of the ISSY and counted up by the 7/48 µs that is the minimum unit time of the system. With reference to the ISCR having a role as a timestamp, the receiving apparatus 20 determines the order in which the BB frames are transmitted as a plurality of divided streams.

The BUFS is (substantially) two-byte information indicating the buffer capacity of the buffer necessary (the required Buffer capacity) to compensate delay fluctuation when the receiving apparatus 20 processes the data. The receiving apparatus 20 compensates (absorbs) the delay fluctuation by securing a storage area as the buffer with a buffer capacity indicated in the BUFS and reading and writing the data from/to the buffer.

The BUFSTAT is (substantially) two-byte information indicating the reading start time at which the receiving apparatus 20 reads the data from the buffer with a buffer capacity indicated in the BUFS. The receiving apparatus 20 start reading the data stored in the buffer with a buffer capacity indicated in the BUFS at the time indicated in the BUFSTAT (the time the data remaining in the buffer becomes the value indicated in the BUFSTAT).

When PLP bundling is performed, in the three-byte field of the ISSY of the BB header of each BB frame is placed the ISCR among the ISCR, BUFS, and BUFSTAT. On the other hand, when PLP bundling is not performed, in the three-byte field of the ISSY of the BB header of each BB frame is selectively placed any one of the ISCR, BUFS, and BUFSTAT.

With reference to Fig. 7 again, the BB frame distribution unit 113 distributes the divided stream provided by the division of the BB frames generated by the BB frame generation unit 112 to the data slice processing unit 114-1 or the data slice processing unit 114-2. By this distribution, for example, a divided stream including the BB frames having the ISCRs "10" and "20" is provided to the data slice processing unit 114-1 and processed. Meanwhile, for example, a divided stream including the BB frames having the ISCRs "30" and "40" is provided to the data slice processing unit 114-2 and processed.

Subsequently, the sending apparatus 10 assembles a C2 frame including the data slices of the divided streams and, for example, modulates the C2 frame to generate a RF signal, and then transmits the RF signal via the transmission path 30. On the other hand, the receiving apparatus 20 in Fig. 7 receives the RF signal from the sending apparatus 10 via the transmission path 30. Then, the data slice processing unit 213-1 and the data slice processing unit 213-2 process the data slices obtained from the RF signal. By this process, (the BB frames included in) the divided stream restored by the data slice processing unit 213-1 is stored in the buffer 214-1, and (the BB frames included in) the divided stream restored by the data slice processing unit 213-2 is stored in the buffer 214-2 in turn.

On the basis of the ISCRs included in the BB headers of the BB frames stored in the buffer 214-1 and the buffer 214-2, the BB frame selection unit 215 reads the BB frame from the buffer 214-1 or the buffer 214-2 and provides the BB frame to the BB frame processing unit 216. In this example, the BB frames having the ISCRs "10" to "40" stored in one of the buffer 214-1 and the buffer 214-2 are read in ascending order on the basis of the values of the ISCRs. Furthermore, the BB frames having the ISCRs "50", "60", and "90" stored in the buffer 214-1 and the BB frames having the ISCRs "70" and "80" stored in the buffer 214-2 are similarly read in ascending order of the values of the ISCRs.

### <3. Method for Avoiding Double Laps of ISCR in PLP Bundling>

### (Effect of Double Laps of ISCR)

As described above, an ISCR is necessarily placed in the three-byte field of an ISSY when PLP bundling is performed, and the receiving apparatus 20 determines the order of the BB frames distributed and transmitted as a plurality of divided streams with reference to the value of the ISCR (timestamp) as the only order information.

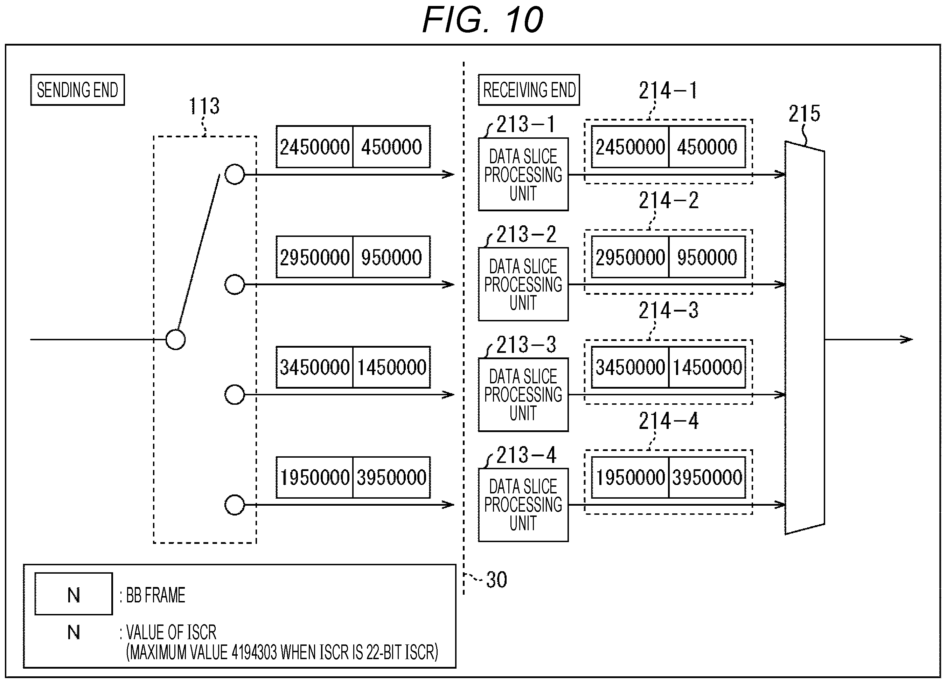

Fig. 10 schematically illustrates, with focus on the BB frames, a state in which double laps of an ISCR occurs when a plurality of divided streams divided by the sending apparatus 10 that is the sending end is reassembled (restored) as the original BB stream by the receiving apparatus 20 that is the receiving end. Herein, the double laps is a state in which a counter value exists over different laps. Normally, there is continuity among the values of ISCRs of the selectable BB frames. However, when double laps of an ISCR occurs, there is no continuity among the values of the ISCRs.

Note that Fig. 10 illustrates the sending end or the process that the sending apparatus 10 performs on the left side of the transmission path 30 shown as a dashed line, and the receiving end or the process that the receiving apparatus 20 performs on the right side of the transmission path 30. Furthermore, the rectangles with numbers in Fig. 10 depict the BB frames, and the numbers indicate the values of the ISCRs (timestamps).

Furthermore, Fig. 10 illustrates an example in which (the stream of) the actual data that is one PLP#i is divided by the BB frame and is transmitted as four data slices in PLP bundling. In this example, four data slices are transmitted. However, the number of data slices used to transmit the one PLP#i is not limited to four, and two, three, or an arbitrary value equal to or higher than five and equal to or lower than 255 may be used.

The sending apparatus 10 in Fig. 10 generates a BB stream including a plurality of BB frames, and the BB frame distribution unit 113 divides the generated BB stream by the BB frame into four divided streams. On the assumption that the data slices that are the four divided streams are data slices DS#1 to DS#4 from the upper side of Fig. 10, the data slice DS#1 includes the BB frame having an ISCR "450000", and the BB frame having an ISCR "2450000".

Similarly, the data slice DS#2 includes the BB frame having an ISCR, "950000" and the BB frame having an ISCR "2950000". Furthermore, the data slice DS#3 includes the BB frame having an ISCR "1450000" and the BB frame having an ISCR "3450000", and the data slice DS#4 includes the BB frame having an ISCR "3950000" and the BB frame having an ISCR "1950000".

The C2 frame that is the data slices including the BB frames distributed as described above is transmitted as an RF signal from the sending apparatus 10 via the transmission path 30 to the receiving apparatus 20.

The receiving apparatus 20 in Fig. 10 receives the RF signal via the transmission path 30 from the sending apparatus 10, and the data slice processing unit 213-1 processes the data slice DS#1 to restore the divided stream from the data slice DS#1. Then, the BB frame having the ISCR "450000" and BB frame having the ISCR "2450000" included in the restored divided stream are sequentially stored in the buffer 214-1.

Similarly, the buffer 214-2 sequentially stores the BB frame having the ISCR "950000" and BB frame having the ISCR "2950000" included in the divided stream restored from the data slice DS#2 by the data slice processing unit 213-2.

The buffer 214-3 sequentially stores the BB frame having the ISCR "1450000" and BB frame having the ISCR "3450000" included in the divided stream restored from the data slice DS#3 by the data slice processing unit 213-3.

Furthermore, the buffer 214-4 sequentially stores the BB frame having the ISCR "3950000" and BB frame having the ISCR "1950000" included in the divided stream restored from the data slice DS#4 by the data slice processing unit 213-4.

The BB frames stored in the buffers 214-1 to 214-4 as described above are selected by the BB frame selection unit 215. The BB frame selection unit 215 selects the BB frames in ascending order of the values of the ISCRs with reference to the value of the ISCR (timestamp) of the BB header added to each BB frame stored in the tops of the buffers 214-1 to 214-4, and provides the selected BB frame to the downstream BB frame processing unit 216.

In the tops of the buffers 214-1 to 214-4 in Fig. 10 are stored the BB frames having the ISCRs "450000", "950000", "1450000", and "3950000" as selectable BB frames. However, the ISCR is a 15-bit or 22-bit counter, and thus counts from zero again when the counted number exceeds the maximum value of the counter. Thus, the BB frames can appropriately be rearranged only after the BB frames are selected in consideration of the effect of the double laps of an ISCR. Note that, for example, when the ISCR is a 22-bit ISCR, the maximum value of the ISCR is "4194303".

When the BB frame having the ISCR with the minimum value is selected from the selectable BB frames stored in the tops of the buffers 214-1 to 214-4 in the example of Fig. 10, the BB frame having the ISCR "450000" stored in the top of the buffer 214-1 is selected. On the assumption that the counter of an ISCR reaches the maximum value and counts from zero again, the counter value may exist over different laps.

In other words, in the example of Fig. 10, when the counting starts from zero again after the counter value reaches the maximum value and the value of the ISCR "450000" is counted, the value of the ISCR "3950000" is likely to be counted before the counted value reaches the maximum value. In this case, the BB frame having the ISCR "3950000" stored in the top of the buffer 214-4 is to be selected next. Thus, when the BB frame having the ISCR "450000" stored in the top of the buffer 214-1 is selected, the BB frames are rearranged in wrong order.

As described above, when a BB frame is selected in wrong order due to the effect of the double laps of the ISCR, the BB frames to be selected after the selectedBB frame (for example, the BB frames having the ISCRs "950000" and "1450000" in Fig. 10) are likely to also be rearranged in wrong order due to the effect. The effect extends over the frames.

Thus, there is a need for minimizing the effect of double laps of an ISCR in channel bonding such as PLP bundling. Hereinafter, a method for avoiding double laps of an ISCR in PLP bundling will be described.

### (1) Determination of BB Frame to Be Selected Using SYNCD

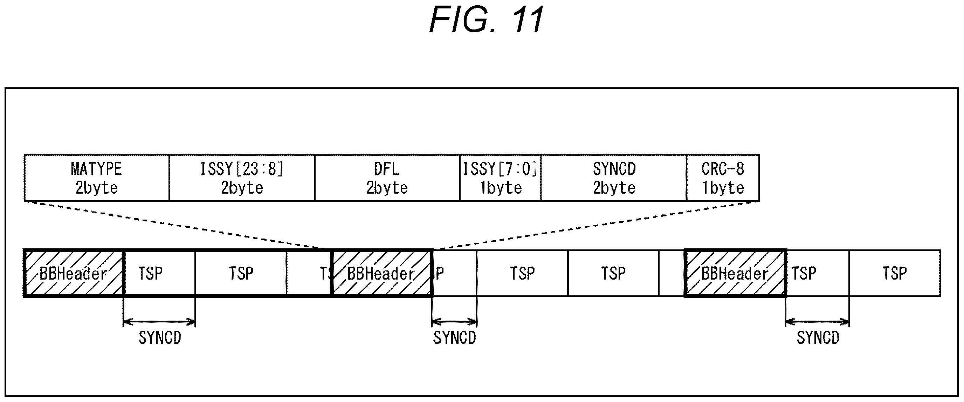

First, with reference to Figs. 11 to 13, a method in which the next BB frame is determined using SYNCD in order to avoid double laps of an ISCR will be described as a method for avoiding double laps of an ISCR in PLP bundling.

### (Method for avoiding double laps of ISCR using SYNCD)

An SYNCD is the information indicating the remaining number of bits necessary to assemble a TS packet in which a BB header is stored when a BB frame is stored in the TS packet (TSP: TS Packet). Forexample, Fig. 11 illustrates a plurality of BB headers stored in the TS packets (TSPs). In each BB header, a two-byte SYNCD indicating the remaining number of bits necessary to assemble the TS packet in which the BB header is stored is placed.

To determine the BB frame to be selected using SYNCD, focusing on the SYNCD, the value (set value) of the SYNCD of the BB header is compared with the expected value of the SYNCD such that the next BB frame is determined among the selectable BB frames.

Note that the expected value of an SYNCD is the remaining number of bits necessary to assemble a TS packet when the BB frame previously selected is stored in the TS packet when the BB frame to be selected next is determined. The number of bits is identical to the number of bits indicated in the SYNCD placed in the BB header of the BB frame to be selected next. In other words, it can be said that the expected value of an SYNCD is the value of the SYNCD of the BB header of the next BB frame, which is expected from the value of a break in the TS packet in which the actual data placed in a BB frame is stored.

As described above, to determine a BB frame to be selected using SYNCD, an ISCR that may cause double laps is not used, instead, the value of the SYNCD of (the BB header of) a selectable BB frame is referenced, and the BB frame to be selected next is determined in accordance with whether the referenced value is identical to the expected value of the SYNCD. Thus, the effect of double laps of an ISCR can be avoided.

In other words, when an ISCR is used to determine the BB frame to be selected next, double laps of the ISCR is likely to occur. Thus, selecting the BB frame having the ISCR with the minimum value is not necessarily correct. However, when an SYNCD is used, a phenomenon such as double laps does not occur. Thus, it is ensured that a correct BB frame is selected.

Alternatively, when the apparatus operates in a mode referred to as Null Packet Deletion (NPD) and a large number of Null packets are added, the values of the ISCRs are also irregular. However, an SYNCD is used instead of an ISCR in this example to select a BB frame. Thus, the irregular ISCRs do not affect the operation.

Note that, when there is no SYNCD with the value identical to the expected value of the SYNCD due to the effect of padding, or when a large amount of data is added for padding and all the values of the SYNCDs become "one" and there is no start point of a TS packet in the BB frame, it is impossible to use an SYNCD to determine the BB frame to be selected next. In such cases, an ISCR may be used.

### (Exemplary Functional Configuration of Control Unit)

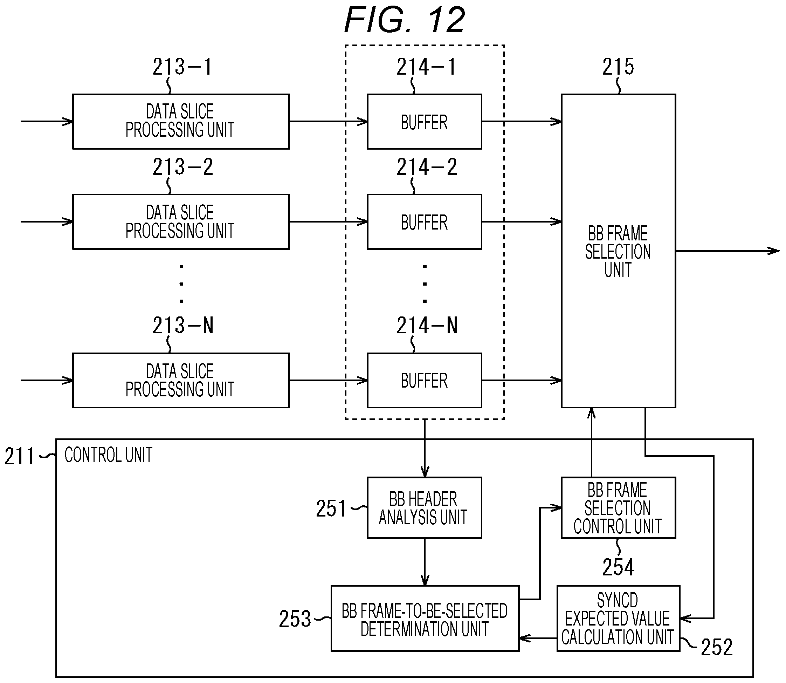

Fig. 12 is a diagram of an exemplary functional configuration of the control unit 211 (Fig. 5) when an SYNCD is used to determine the BB frame to be selected.

In Fig. 12, the control unit 211 includes a BB header analysis unit 251, an SYNCD expected value calculation unit 252, a BB frame-to-be-selected determination unit 253, and a BB frame selection control unit 254.

The BB header analysis unit 251 analyzes the BB headers of the BB frames stored in the tops of the buffers 214-1 to 214-N, and provides the analysis result to the BB frame-to-be-selected determination unit 253.

The SYNCD expected value calculation unit 252 calculates the expected value of an SYNCD from the BB frame previously selected by the BB frame selection unit 215 and provides the calculated value to the BB frame-to-be-selected determination unit 253.

To the BB frame-to-be-selected determination unit 253 are provided the analysis result of the BB headers from the BB header analysis unit 251 and the expected value of the SYNCD from the SYNCD expected value calculation unit 252. The analysis result of the BB headers includes the values of the SYNCDs and ISCRs obtained from the selectable BB frames stored in the tops of the buffers 214-1 to 214-N.

The BB frame-to-be-selected determination unit 253 determines whether there is an SYNCD with the value identical to the expected value of the SYNCD by comparing the values of the SYNCDs obtained from the selectable BB frames with the expected value of the SYNCD.

When there is an SYNCD with the value identical to the expected value of the SYNCD, the BB frame-to-be-selected determination unit 253 determines that the BB frame of (the BB header including the value of) the SYNCD is the next BB frame, and provides the determination result to the BB frame selection control unit 254.

Alternatively, when there is no SYNCD with the value identical to the expected value of the SYNCD, the BB frame-to-be-selected determination unit 253 determines that the BB frame having the ISCR with the minimum value is the next BB frame among the selectable BB frames stored in the tops of the buffers 214-1 to 214-N on the basis of the analysis result of the ISCRs provided from the BB header analysis unit 251, and provides the determination result to the BB frame selection control unit 254.

The BB frame selection control unit 254 controls the BB frame selection unit 215 on the basis of the determination result provided from the BB frame-to-be-selected determination unit 253 such that the next BB frame is selected among the selectable BB frames stored in the tops of the buffers 214-1 to 214-N in accordance with the determination result.

### (Flow of First BB Frame Selection Process)

Next, the flow of a first BB frame selection process corresponding to the process of step S220 in Fig. 6 will be described with reference to the flowchart of Fig. 13.

In step S241, the BB frame-to-be-selected determination unit 253 determines whether there is an SYNCD with the value identical to the expected value of the SYNCD by comparing the values of the SYNCDs of the selectable BB frames analyzed by the BB header analysis unit 251 with the expected value of the SYNCD calculated by the SYNCD expected value calculation unit 252.

When it is determined in step S241 that there is an SYNCD having the value identical to the expected value of the SYNCD, the process goes to step S242. The BB frame-to-be-selected determination unit 253 determines in step S242 that the BB frame of the SYNCD having the value identical to the expected value of the SYNCD is the next BB frame, and provides the determination result to the BB frame selection control unit 254.

In step S243, the BB frame selection unit 215 selects the BB frame corresponding to the determination result of the process of step S242 (the BB frame of the SYNCD having the value identical to the expected value of the SYNCD) from the selectable BB frames stored in the tops of the buffers 214-1 to 214-N in accordance with the control by the BB frame selection control unit 254.

On the other hand, when it is determined in step S241 that there is no SYNCD with the value identical to the expected value of the SYNCD, the process goes to step S244. The BB frame-to-be-selected determination unit 253 determines in step S244 that the BB frame having the ISCR with the minimum value is the next BB frame among the selectable BB frames stored in the tops of the buffers 214-1 to 214-N, and provides the determination result to the BB frame selection control unit 254.

In step S245, the BB frame selection unit 215 selects the BB frame corresponding to the determination result of the process of step S244 (the BB frame having the ISCR with the minimum value) from the selectable BB frames stored in the tops of the buffers 214-1 to 214-N in accordance with the control by the BB frame selection control unit 254.

When the process of step S243 or S245 is completed, the process goes back to step S220 of Fig. 6, and the processes in and after step S220 are performed.

The first BB frame selection process has described above. In the first BB frame selection process, the values of the SYNCDs of (the BB headers of) the selectable BB frames stored in the tops of the buffers 214-1 to 214-N are referenced and the BB frame to be selected next is determined in accordance with whether the value of the SYNCD is identical to the expected value of the SYNCD. Thus, the effect of double laps of an ISCR can be avoided and minimized.

### (2) Determination of BB Frame to Be Selected Using Difference Value between ISCRs

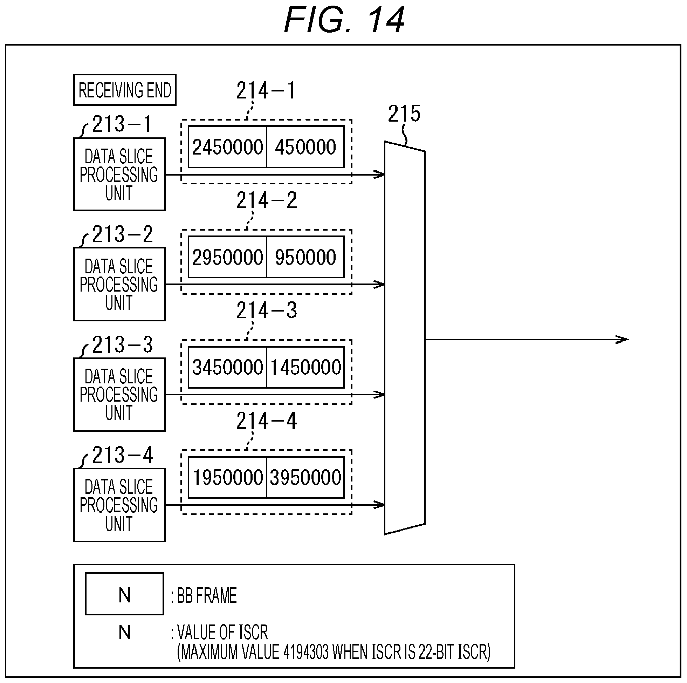

Next, with reference to Figs. 14 to 17, a method for avoiding double laps of an ISCR by determining the next BB frame using the difference values between ISCRs will be described as a method for avoiding double laps of an ISCR in PLP bundling.

### (Method for Avoiding Double Laps of ISCR Using Difference Values between ISCRs)

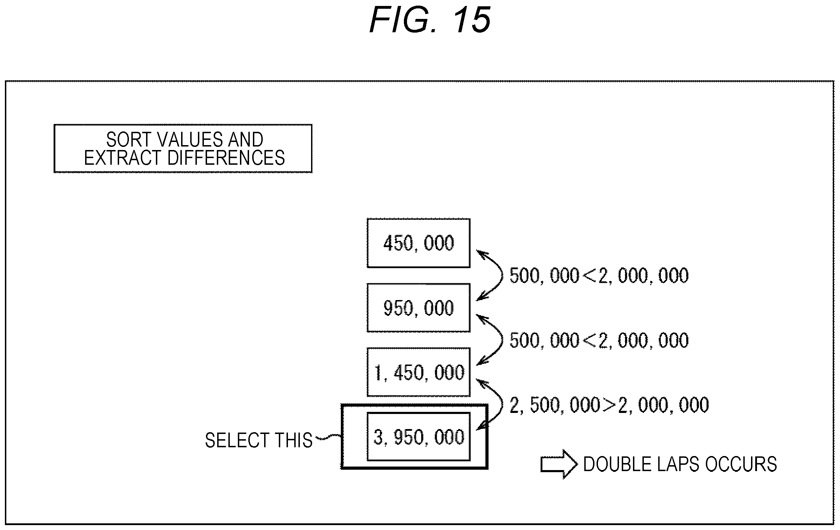

Hereinafter, a method for avoiding double laps of an ISCR using the difference values between ISCRs will be described first with reference to Figs. 14 and 15.

In Fig. 14, the BB frames having ISCRs "450000", "950000", "1450000", and "3950000" are stored and selectable in the tops of the buffers 214-1 to 214-4. However, as described above, it is maybe impossible to appropriately rearrange the BB frames unless the BB frames are selected in consideration of the effect of double laps of an ISCR. In light of the foregoing, in the method for avoiding double laps of an ISCR using the difference values between ISCRs, the values of the ISCRs of the selectable BB frames are sorted (rearranged) in ascending or descending order and it is determined that double laps of an ISCR occurs when the difference value between the ISCRs exceeds a predetermined threshold.

Specifically, when the values of the ISCRs of the BB frames stored in the tops of the buffers 214-1 to 214-4 are sorted in ascending order, the BB frames are arranged in the order of "450000", "950000", "1450000", and "3950000" as illustrated in Fig. 15. Furthermore, when each difference value between the ISCRs is calculated, the difference value between "450000" and "950000" is "500000", the difference value between "950000" and "1450000" is "500000", and the difference value between "1450000" and "3950000" is "2500000".

In this example, the threshold compared with each difference value between the ISCRs is determined, for example, in accordance with the transmission rate. When the threshold is set at "2000000" that is approximately half of the maximum value of a 22-bit ISCR, both the difference value between "450000" and"950000" and the difference value between "450000" and "950000" are "500000" and thus lower than the threshold that is "2000000". As described above, when the difference value between the ISCRs is lower than the threshold, it is determined that double laps of an ISCR does not occur.

On the other hand, the difference value between "1450000" and "3950000" is "2500000" and thus exceeds the threshold that is "2000000". As described above, when the difference value between the ISCRs exceeds the threshold, it is determined that double laps of an ISCR occurs. In such a case, the BB frame having the larger value of the values of the two ISCRs having the maximum difference value of an ISCR is determined as the BB frame to be selected next. In this example, the difference value between "1450000" and "3950000" is the maximum difference value, and thus the BB frame having the ISCR "3950000" larger than the ISCR "1450000" is determined as the next BB frame.

In other words, in the example of Fig. 14, when a counter value reaches the maximum value and the counting starts from zero again to count the value of the ISCR "450000", the value of the ISCR "3950000" is counted before the counter value reaches the maximum value. Thus, the BB frame having the ISCR "3950000" stored in the top of the buffer 214-4 is selected before the BB frame having the ISCR "450000" stored in the top of the buffer 214-1 is selected. This selection can rearrange the BB frames in correct order.

As described above, in the determination of the BB frame to be selected using the difference values between the ISCRs, an ISCR that may cause double laps is not immediately used, and the BB frame to be selected next is determined in accordance with whether the difference value of the ISCRs exceeds the threshold. Thus, the effect of the double laps of an ISCR can be avoided.

In other words, when ISCRs are used to determine the BB frame to be selected next, the ISCR may cause double laps and thus selecting the BB frame having the ISCR with the minimum value is not necessarily correct. However, using the difference values between the ISCRs does not cause a phenomenon such as double laps, and thus can ensure that a correct BB frame is selected.

Note that, when the apparatus operates in a Null packet deletion, the difference between the ISCRs is not constant and thus it is difficult to detect the difference. Thus, the method in which the difference values between the ISCRs are used to avoid double laps of an ISCR is preferably used in a mode other than the Null packet deletion.

Alternatively, for example, when the BB frame to be selected next is determined between the BB frames stored in the tops of the buffer 214-1 and the buffer 214-2, only the two ISCRs are compared. In this example, the difference in a case in which double laps of an ISCR occurs and the difference in a case in which double laps of an ISCR does not occur are compared, and it may be determined that one of the cases, whichever the difference value between the ISCRs is smaller, is correct.

### (Exemplary Functional Configuration of Control Unit)

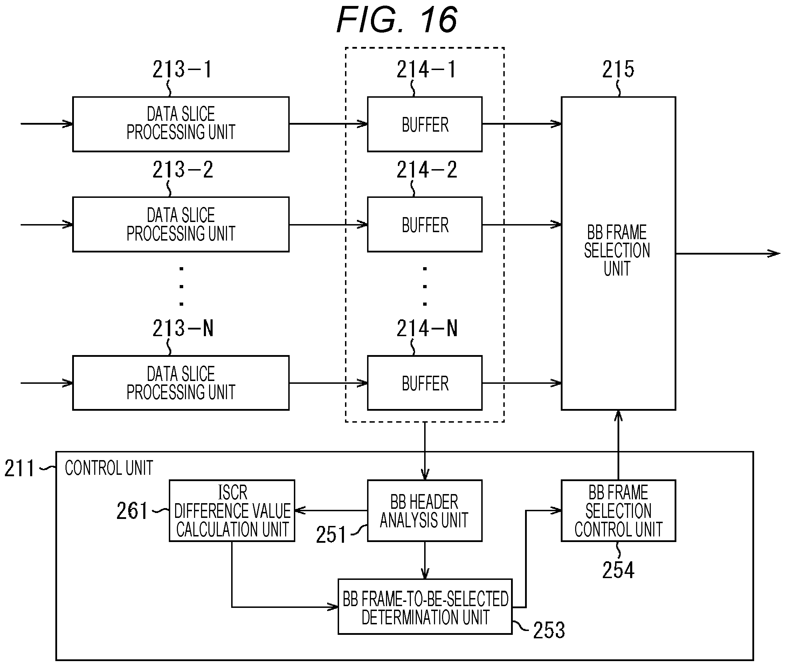

Fig. 16 is a diagram of an exemplary functional configuration of the control unit 211 (Fig. 5) when the difference values between the ISCRs are used to determine the BB frame to be selected. Note that the parts of the control unit 211 of Fig. 16 corresponding to the parts of the control unit 211 of Fig. 12 will be put with the same reference signs and the description will properly be omitted.

In Fig. 16, the control unit 211 includes the BB header analysis unit 251, the BB frame-to-be-selected determination unit 253, the BB frame selection control unit 254, and an ISCR difference value calculation unit 261. In the other words, in comparison with the control unit 211 of Fig. 12, the control unit 211 of Fig. 16 includes the ISCR difference value calculation unit 261 instead of the SYNCD expected value calculation unit 252.

The ISCR difference value calculation unit 261 sorts (rearranges) the values of the ISCRs of the selectable BB frames in ascending or descending order on the basis of the analysis result of the ISCRs provided from the BB header analysis unit 251 and calculates each difference value between the ISCRs, and provides the calculated difference values to the BB frame-to-be-selected determination unit 253.

The BB frame-to-be-selected determination unit 253 determines whether the difference values between the ISCRs exceed a predetermined threshold by comparing each difference values between the ISCRs provided from the ISCR difference value calculation unit 261 with the threshold.

When all the difference values between the ISCRs are lower than the threshold, the BB frame-to-be-selected determination unit 253 determines that the BB frame having the ISCR with the minimum value among the selectable BB frames stored in the tops of the buffers 214-1 to 214-N is the next BB frame on the basis of the analysis result of the ISCRs provided from the BB header analysis unit 251, and provides the determination result to the BB frame selection control unit 254.

Alternatively, when a difference value of the ISCRs exceeds the threshold, the BB frame-to-be-selected determination unit 253 determines that the BB frame having the ISCR with the larger value of the values of the two ISCRs having the maximum difference value is the BB frame to be selected next, and provides the determination result to the BB frame selection control unit 254.

The BB frame selection control unit 254 controls the BB frame selection unit 215 on the basis of the determination result provided from the BB frame-to-be-selected determination unit 253 such that the next BB frame in accordance with the determination result is selected from the selectable BB frames stored in the tops of the buffers 214-1 to 214-N.

### (Flow of Second BB Frame Selection Process)

Next, the flow of a second BB frame selection process corresponding to the process of step S220 in Fig. 6 will be described with reference to the flowchart of Fig. 17.

In step S261, the ISCR difference value calculation unit 261 sorts (rearranges) the values of the ISCRs of the selectable BB frames in ascending or descending order on the basis of the analysis result of the ISCRs provided from the BB header analysis unit 251 and calculates each difference value between the ISCRs.

In step S2 62, the BB frame-to-be-selected determination unit 253 determines on the basis of the difference values of the ISCRs calculated in the process of step S261 whether the maximum difference value of the ISCRs exceeds a predetermined threshold.

When it is determined in step S262 that the maximum difference value between the ISCRs exceeds the predetermined threshold, the process goes to step S263. In step S263, the BB frame-to-be-selected determination unit 253 determines that the BB frame having the ISCR with the larger value of the values of the two ISCRs having the maximum difference value is the next BB frame, and provides the determination result to the BB frame selection control unit 254.

In step S264, the BB frame selection unit 215 selects the BB frame in accordance with the determination result of the process of step S263 (the BB frame having the ISCR with the larger value of the values of the two ISCRs having the maximum difference value) from the selectable BB frames stored in the tops of the buffers 214-1 to 214-N in accordance with the control by the BB frame selection control unit 254.

Alternatively, when it is determined in step S262 that the maximum difference value of the ISCRs is lower than the predetermined threshold, the process goes to step S265. In step S265, the BB frame-to-be-selected determination unit 253 determines that the BB frame having the ISCR with the minimum value among the selectable BB frames stored in the tops of the buffers 214-1 to 214-N is the next BB frame, and provides the determination result to the BB frame selection control unit 254.

In step S266, the BB frame selection unit 215 selects the BB frame in accordance with the determination result of the process of step S265 (the BB frame having the ISCR with the minimum value) from the selectable BB frames stored in the tops of the buffers 214-1 to 214-N in accordance with the control by the BB frame selection control unit 254.

When the process of step S264 or S266 is completed, the process goes back to step S220 in Fig. 6 and the processes in and after step S220 are performed.

The second BB frame selection process has been described above. In the second BB frame selection process, the BB frame to be selected next is determined in accordance with whether the difference values between the ISCRs (of the BB headers) of the selectable BB frames stored in the tops of the buffers 214-1 to 214-N exceed the threshold. Thus, the effect of double laps of an ISCR can be avoided and minimized.

### <4. Computer Configuration>

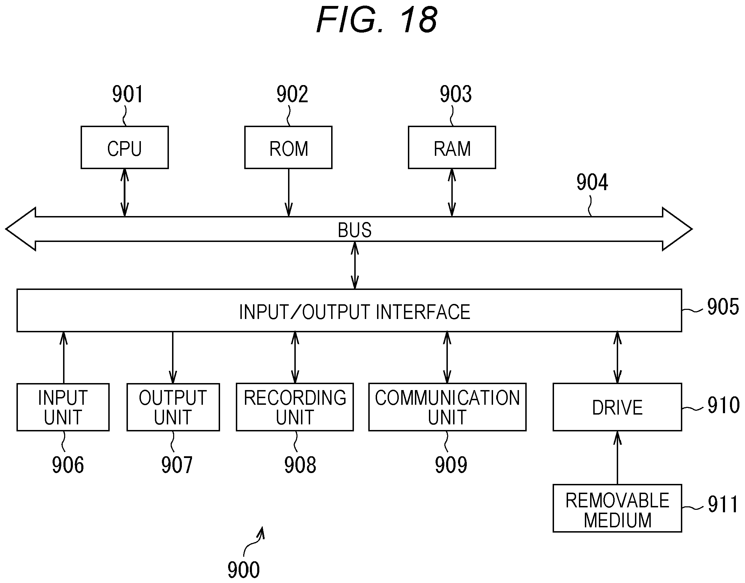

The series of processes described above can be performed either with hardware or with software. When the series of processes is performed with software, a program in which the software is configured is installed on a computer. Fig. 18 is a diagram of an exemplary configuration of the computer hardware that performs the series of processes with a program.

In a computer 900, a Central Processing Unit (CPU) 901, a Read Only Memory (ROM) 902, and a Random Access Memory (RAM) 903 are connected to each other via a bus 904. An input/output interface 905 is also connected to the bus 904. To the input/output interface 905 are connected an input unit 906, an output unit 907, a recording unit 908, a communication unit 909, and a drive 910.

The input unit 906 includes, for example, a keyboard, a mouse, or a microphone. The output unit 907 includes, for example, a display or a loudspeaker. The recording unit 908 includes, for example, a hard disk or a non-volatile memory. The communication unit 909 includes, for example, a network interface. The drive 910 drives a removable medium 911 such as a magnetic disk, an optical disk, a magneto-optical disk, or a semiconductor memory.

In the computer 900 having the configuration described above, the CPU 901 loads the program stored in the ROM 902 or the recording unit 908 via the input/output interface 905 and the bus 904 onto the RAM 903 and executes the program. This performs the series of processes.

For example, the program executed by the computer 900 (CPU 901) can be recorded in the removable medium 911 as a package medium or the like and provided. Alternatively, the program can be provided via a wired or wireless transmission medium such as a local area network, the Internet, or a digital satellite broadcast.

In the computer 900, when the removable medium 911 is attached to the drive 910, a program can be installed via the input/output interface 905 onto the recording unit 908. Alternatively, the program can be received with the communication unit 909 via a wired or wireless transmission medium and installed onto the recording unit 908. Alternatively, the program can be installed on the ROM 902 or the recording unit 908 in advance.

The processes that the computer performs in accordance with programs herein are not necessarily performed chronologically in the order described in the flowcharts. In other words, the processes that the computer performs in accordance with a program include the processes performed in parallel or individually (for example, parallel processes or the processes by the object). Alternatively, the program can be executed by a computer (processor), or can be distributed and executed by a plurality of computers.

Note that the embodiments of the present technology are not limited to the embodiments descried above, and can variously be changed without departing from the gist of the present technology.

Alternatively, the present technology can have the following configurations.
(1) A receiving apparatus including:
   a receiving unit that receives a plurality of divided streams that is a plurality of data slices to which BaseBand (BB) frames of a BB stream are distributed, the BB stream being a stream including the BB frames;
   a selection unit that selects a next BB frame from selectable BB frames among the BB frames on the basis of difference values between time information items indicating order in which the BB frames are selected when the plurality of divided streams are reassembled; and
   a reassembling unit that reassembles the plurality of divided streams as the BB stream originally assembled by sequentially processing the BB frames in order in which the selection unit selects the BB frames.
(2) The receiving apparatus according to (1),
   wherein the time information item is an Input Stream Time Reference (ISCR) of an Input Stream Synchronizer (ISSY) prescribed in a Digital Video Broadcasting - Cable second generation (DVB-C2) standard.
(3) The receiving apparatus according to (2),
   wherein, when difference values between ISCRs calculated after values of the ISCRs of the selectable BB frames are sorted exceed a predetermined threshold, the selection unit selects the BB frame to which a BB header including an ISCR having a larger value of values of two ISCRs having a maximum difference value among the calculated difference values is added as the next BB frame.
(4) The receiving apparatus according to (2) or (3),
   wherein, when there is no difference value between the ISCRs exceeding the predetermined threshold among the different values calculated after the values of the ISCRs of the selectable BB frames are sorted, the selection unit selects the BB frame to which the BB header including an ISCR having a minimum value is added as the next BB frame.
(5) A receiving method of a receiving apparatus, the receiving method including the steps of:
   receiving a plurality of divided streams that is a plurality of data slices to which BB frames of a BB stream are distributed, the BB stream being a stream including the BB frames;
   selecting a next BB frame from selectable BB frames among the BB frames on the basis of difference values between time information items indicating order in which the BB frames are selected when the plurality of divided streams are reassembled; and
   reassembling the plurality of divided streams as the BB stream originally assembled by sequentially processing the BB frames in order in which the BB frames are selected,
   the steps of receiving, selecting and reassembling being performed by the receiving apparatus.

### REFERENCE SIGNS LIST

- 1: Transmission system
- 10: Sending apparatus
- 20: Receiving apparatus
- 30: Transmission path
- 111: Control unit
- 112: BB frame generation unit
- 113: BB frame distribution unit
- 114: Data slice processing unit
- 115: Frame assembling unit
- 116: Sending unit
- 211: Control unit
- 212: Receiving unit
- 213: Data slice processing unit
- 214: Buffer
- 215: BB frame selection unit
- 216: BB frame processing unit
- 251: BB header analysis unit
- 252: SYNCD expected value calculation unit
- 253: BB frame-to-be-selected determination unit
- 254: BB frame selection control unit
- 261: ISCR difference value calculation unit
- 900: Computer
- 901: CPU

## Claims

1. A receiving apparatus comprising:
a receiving unit that receives a plurality of divided streams that is a plurality of data slices to which BaseBand (BB) frames of a BB stream are distributed, the BB stream being a stream including the BB frames;
a selection unit that selects a next BB frame from selectable BB frames among the BB frames on the basis of difference values between time information items indicating order in which the BB frames are selected when the plurality of divided streams are reassembled; and
a reassembling unit that reassembles the plurality of divided streams as the BB stream originally assembled by sequentially processing the BB frames in order in which the selection unit selects the BB frames.

2. The receiving apparatus according to claim 1,
wherein the time information item is an Input Stream Time Reference (ISCR) of an Input Stream Synchronizer (ISSY) prescribed in a Digital Video Broadcasting - Cable second generation (DVB-C2) standard.

3. The receiving apparatus according to claim 2,
wherein, when difference values between ISCRs calculated after values of the ISCRs of the selectable BB frames are sorted exceed a predetermined threshold, the selection unit selects the BB frame to which a BB header including an ISCR having a larger value of values of two ISCRs having a maximum difference value among the calculated difference values is added as the next BB frame.

4. The receiving apparatus according to claim 3,
wherein, when there is no difference value between the ISCRs exceeding the predetermined threshold, the selection unit selects the BB frame to which the BB header including an ISCR having a minimum value is added as the next BB frame.

5. A receiving method of a receiving apparatus, the receiving method comprising the steps of:
receiving a plurality of divided streams that is a plurality of data slices to which BB frames of a BB stream are distributed, the BB stream being a stream including the BB frames;
selecting a next BB frame from selectable BB frames among the BB frames on the basis of difference values between time information items indicating order in which the BB frames are selected when the plurality of divided streams are reassembled; and
reassembling the plurality of divided streams as the BB stream originally assembled by sequentially processing the BB frames in order in which the BB frames are selected,
the steps of receiving, selecting and reassembling being performed by the receiving apparatus.
